# EUROPEAN PATENT APPLICATION

(11) **EP 4 290 351 A1**
(43) Date of publication of application: **13.12.2023**
(21) Application number: 22891179.8
(22) Date of filing: 27.06.2022
(51) Int. Cl.: G06F 3/0486

(54) **ENVIRONMENT MODELING METHOD AND APPARATUS BASED ON DECISION FLOW GRAPH, AND ELECTRONIC DEVICE**

(30) Priority: 24.04.2022 CN 202210434180; 25.05.2022 CN 202210579742
(71) Applicant: Polixir Technologies Limited, Nanjing, Jiangsu 210038 (CN)
(72) Inventor: QIN, Rongjun, Nanjing, Jiangsu 210038 (CN); ZHU, Huanhuan, Nanjing, Jiangsu 210031 (CN); GAO, Songyi, Nanjing, Jiangsu 211112 (CN)
(74) Representative: Cabinet Beaumont
(86) International application number: PCT/CN2022/101444
(87) International publication number: WO 2023/206771

(57) **Abstract**

Provided are a decision flowchart-based environmental modeling method and apparatus, and an electronic device. The method includes the following: acquiring a target business feature and feature information of the target business feature in a target business scenario to be modeled; constructing, based on the target business feature, a target decision flowchart corresponding to the target business scenario, where business nodes in the target decision flowchart include at least one environment state node and at least one decision agent node; constructing a target computation graph based on a business feature bound to each business node and data flow information among the business nodes in the target decision flowchart; and performing environmental modeling based on the target computation graph and the feature information of the target business feature to determine a target virtual environment model corresponding to the target business scenario.

## Description

This application claims priority to Chinese Patent Application No. 202210434180.9 filed with the China National Intellectual Property Administration (CNIPA) on Apr. 24, 2022, the disclosure of which is incorporated herein by reference in its entirety.

This application claims priority to Chinese Patent Application No. 202210579742.9 filed with the CNIPA on May 25, 2022, the disclosure of which is incorporated herein by reference in its entirety.

### TECHNICAL FIELD

Embodiments of the present application relate to computer technology, for example, a decision flowchart-based environmental modeling method and apparatus, and an electronic device.

### BACKGROUND

With the rapid development of computer technology, reinforcement learning has attracted more and more attention as a manner of machine learning. The reinforcement learning refers to that an agent learns in a trial-and-error manner and guides a behavior based on rewards gained from the interaction with an environment, so that the agent gains a maximum reward.

At present, in a closed operating environment or an environment in which rules are very clear, such as a game environment, the reinforcement learning can be performed by a large number of trial-and-error samples to obtain a relatively good learning effect. However, business environments in most business scenarios are open, uncertain, and boundary-blurred; thus, the reinforcement learning in these business environments is difficult to implement and requires a large amount of learning costs. Currently, an urgent need exists for a manner of performing environmental modeling on a business scenario more conveniently to support the reinforcement learning in different business scenarios.

### SUMMARY

Embodiments of the present application provide a decision flowchart-based environmental modeling method and apparatus, and an electronic device so that virtual environment models in different business scenarios can be constructed more conveniently based on decision flowcharts, thereby satisfying personalized needs of users.

According to one aspect of the present application, a decision flowchart-based environmental modeling method is provided. The method includes the steps described below.

A target business feature and feature information of the target business feature in a target business scenario to be modeled are acquired.

A target decision flowchart corresponding to the target business scenario is constructed based on the target business feature, where business nodes in the target decision flowchart include at least one environment state node and at least one decision agent node, and the at least one environment state node includes a current environment state child node, an environment state transition child node, and a next environment state child node.

A target computation graph is constructed based on a business feature bound to each business node in the target decision flowchart and data flow information among multiple business nodes in the target decision flowchart.

Environmental modeling is performed based on the target computation graph and the feature information of the target business feature so that a target virtual environment model corresponding to the target business scenario is determined.

According to another aspect of the present application, a decision flowchart-based environmental modeling apparatus is provided. The apparatus includes a target business feature acquisition module, a target decision flowchart construction module, a target computation graph construction module, and a target virtual environment model determination module.

The target business feature acquisition module is configured to acquire a target business feature and feature information of the target business feature in a target business scenario to be modeled.

The target decision flowchart construction module is configured to construct, based on the target business feature, a target decision flowchart corresponding to the target business scenario, where business nodes in the target decision flowchart include at least one environment state node and at least one decision agent node, and each of the at least one environment state node includes a current environment state child node, an environment state transition child node, and a next environment state child node.

The target computation graph construction module is configured to construct a target computation graph based on a business feature bound to each business node in the target decision flowchart and data flow information among multiple business nodes in the target decision flowchart.

The target virtual environment model determination module is configured to perform environmental modeling based on the target computation graph and the feature information of the target business feature to determine a target virtual environment model corresponding to the target business scenario.

According to another aspect of the present application, an electronic device is provided. The device includes at least one processor and a memory.

The memory is communicatively connected to the at least one processor.

The memory stores a computer program executable by the at least one processor, where the computer program is executed by the at least one processor to enable the at least one processor to perform the decision flowchart-based environmental modeling method according to any one of the embodiments of the present application.

According to another aspect of the present application, a computer-readable storage medium is provided. The computer-readable storage medium includes a computer program which, when executed by a processor, enables the processor to perform the decision flowchart-based environmental modeling method according to any one of the embodiments of the present application.

### BRIEF DESCRIPTION OF DRAWINGS

FIG. 1 is a flowchart of a decision flowchart-based environmental modeling method according to embodiment one of the present application.
FIG. 2 shows an example of a decision flowchart involved in embodiment one of the present application.
FIG. 3 is a flowchart of a decision flowchart-based environmental modeling method according to embodiment two of the present application.
FIG. 4 is a structure diagram of a decision flowchart-based environmental modeling apparatus according to embodiment three of the present application.
FIG. 5 is a structure diagram of an electronic device implementing a decision flowchart-based environmental modeling method according to an embodiment of the present application.

### DETAILED DESCRIPTION

Hereinafter technical schemes in embodiments of the present application are described clearly and completely in conjunction with drawings in the embodiments of the present application.

It is to be noted that the terms "target" and the like in the description, claims, and drawings of the present application are used to distinguish between similar objects and are not necessarily used to describe a particular order or sequence. It is to be understood that the data used in this manner are interchangeable where appropriate so that the embodiments of the present application described herein can also be implemented in an order not illustrated or described herein. In addition, terms "including" and "having" or any variations thereof are intended to encompass a non-exclusive inclusion. For example, a process, method, system, product, or device that includes a series of steps or units not only includes the expressly listed steps or units but may also include other steps or units that are not expressly listed or are inherent to such process, method, system, product, or device.

### Embodiment one

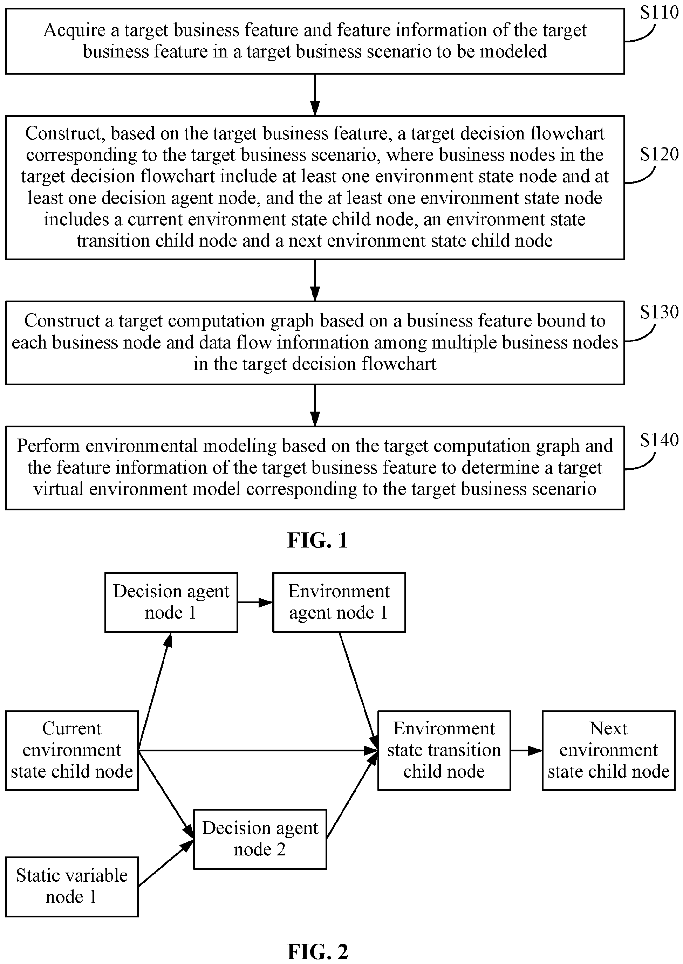

FIG. 1 is a flowchart of a decision flowchart-based environmental modeling method according to embodiment one of the present application. The present embodiment is applicable to the case where environmental modeling is performed on any business scenario. The method may be performed by a decision flowchart-based environmental modeling apparatus. The apparatus may be implemented by hardware and/or software and may be configured in an electronic device. As shown in FIG. 1, the method includes the steps described below.

In S 110, a target business feature and feature information of the target business feature in a target business scenario to be modeled are acquired.

The target business scenario may be any business scenario where a decision is required. The target business scenario in the present embodiment may be open, uncertain, and boundary-blurred. For example, the target business scenario may be an item search scenario. For example, after a user inputs search content and performs a search request, information about recommended items searched for and a display order of the recommended items are determined based on the search request. The order of the recommended items presented to the user is very important and directly affects the purchasing behavior of the user. To perform reinforcement learning on a recommendation order in a decision manner without interfering with the normal use of the user, a virtual environment model approximating to the real item search scenario needs to be constructed so that in the virtual environment, some items are recommended and interaction is performed with virtual users in the environment, that is, interaction about purchasing behaviors is performed. Therefore, the order of the recommended items may be obtained through the reinforcement learning in the virtual environment. Thus, a decision obtained based on learning can increase a user purchase rate in the real item search scenario. For another example, the target business scenario may be a pickup and order allocation scenario. For example, orders are allocated to pickup persons so as to determine an order allocation manner with the shortest pickup time. To perform the reinforcement learning on the order allocation manner in the decision manner without interfering with the normal use of the user, a virtual environment model approximating to the real pickup and order allocation scenario needs to be constructed so that in the virtual environment, interaction is performed with the environment through some virtual orders. Thus, the order allocation manner with the shortest pickup time can be obtained through the reinforcement learning in the virtual environment.

The target business feature may be all business features collected in the target business scenario and may be characterized by using business parameter identifiers. The feature information of the target business feature may refer to specific data of the target business feature, that is, specific business parameter values. The target business feature may include business environment features and business decision features. The business environment features may include environment parameter information before a decision and environment parameter information after the decision. The business decision features may be decision parameter information obtained through interaction with an environment in a preset decision manner, that is, information about multiple actions performed by an agent. The preset decision manner may be a decision manner in the related art. For example, in the item search scenario, the preset decision manner may be sorting based on item sales and/or item scores. In the pickup and order allocation scenario, the preset decision manner may be allocating orders based on the shortest path.

For example, in the present embodiment, feature processing may be performed on the feature information of the target business feature and the target business feature in the target business scenario so that feature information in the form of a time sequence is obtained. For example, the feature information in the form of the time sequence is f Trajectory 1: State at Time 1, Decision Action 1, Decision Result 1, State at Time 2, Decision Action 2..., State at End Time N}, {Trajectory 2: State at Time 1, Decision Action 1, Decision Result 1, State at Time 2, Decision Action 2..., State at End Time N... }, and the like.

In S120, a target decision flowchart corresponding to the target business scenario is constructed based on the target business feature, where business nodes in the target decision flowchart include at least one environment state node and at least one decision agent node, and the at least one environment state node includes a current environment state child node, an environment state transition child node, and a next environment state child node.

The target decision flowchart may be a directed acyclic graph and used for characterizing a decision relation among different business features at each time point. Input and output of data flows in the target decision flowchart cannot form a loop, that is, the structure of the target decision flowchart conforms to the structure of the directed acyclic graph. Each business node in the target decision flowchart represents a decision process for calculating parameters of the node, and a line between business nodes represents a direction of a data flow. The environment state node is a combination of nodes. The environment state node includes the current environment state child node, the environment state transition child node, and the next environment state child node. Alternatively, the environment state node includes the current environment state child node and the next environment state child node. The current environment state child node is an environment observation value at the start time in the entire business interaction environment. The environment state transition child node is a process of calculating an environment state at the next time from an environment state at the current time and an agent action in the environment. The next environment state child node may serve as an environment state observation value at the start time of the next round of business interaction after the entire business interaction is completed. The decision agent node may be a key host node for the decision in the target business scenario and is used for deciding actions performed in different environment states. For example, in a racing scenario, a game scenario is the environment, a racing car is a decision agent, the position of the racing car is a state, an operation on the racing car is an action, how to operate the racing car is a decision, and a match score is a reward. The target decision flowchart constructed in the present embodiment may include at least one environment state node and the decision agent node. The number of environment state nodes and the number of decision agent nodes may be determined based on the actual situation of the target business scenario.

The current environment state child node supports the output of a data flow. The environment state transition child node supports the input of a data flow and outputs a data flow to the next environment state child node. The decision agent node may support both the input of a data flow and the output of a data flow. Thus, data flows and decision processes in the target business scenario can be more accurately described by using the environment state node and the decision agent node.

For example, the business nodes in the target decision flowchart also include at least one environment agent node and/or at least one static variable node. The environment agent node may refer to another host node having a decision-making capability in the target business scenario and is used for assisting in deciding the actions performed in different environment states. The static variable node may refer to a fixed business feature in the target business scenario and may be involved in and affect the business environment and the decision so that the decision processes can be more accurately characterized. The environment agent node in the present embodiment may support both the input of a data flow and the output of a data flow. The static variable node supports only the output of a data flow and does not support the input of a data flow. The target decision flowchart constructed in the present embodiment may also include at least one environment agent node and the static variable node. The number of environment agent nodes and the number of static variable nodes may be determined based on the actual situation of the target business scenario. For example, FIG. 2 shows an example of a decision flowchart. As shown in FIG. 2, the decision flowchart may include one environment state node (for example, including the current environment state child node, the environment state transition child node, and the next environment state child node), two decision agent nodes, one environment agent node, and one static variable node. Directions of data flows among multiple nodes are shown in FIG. 2.

In the present embodiment, the target decision flowchart may be automatically constructed based on the target business feature so that construction efficiency is improved. In the present embodiment, the target decision flowchart may also be manually constructed based on a configuration operation triggered by a user on a visualization interface, so as to satisfy the personalized needs of the user and achieve a dynamic configuration. In the present embodiment, with the decision flowchart constructed, the decision processes of multiple business parameters are described more standardly in a uniform format so that the subsequent environmental modeling can be performed more conveniently and accurately based on the decision flowchart.

For example, S120 may include performing a feature analysis on the target business feature to determine a dependency relation among multiple target business features; and creating the multiple business nodes and determining the data flow information among the multiple business nodes based on the dependency relation to construct the target decision flowchart corresponding to the target business scenario.

For example, the feature analysis may be performed on target business features at each time and in the form of the time sequence so as to determine a feature type corresponding to each target business feature, such as an environment state feature, a decision agent, an environment agent, or a static variable, and the dependency relation among the multiple target business features. For example, business feature A needs to be determined based on business feature B and business feature C. A corresponding business node is created based on the feature type corresponding to each target business feature. For example, if the target business feature is the environment state feature, an environment state node corresponding to the business feature is created; if the target business feature is the decision agent, a decision agent node corresponding to the target business feature is created; if the target business feature is the environment agent, an environment agent node corresponding to the target business feature is created; and if the target business feature is the static variable, a static variable node corresponding to the target business feature is created. The data flow information among the multiple business nodes is determined based on the dependency relation among the multiple target business features. For example, data flows of the business feature B and the business feature C may be output to the business feature A so that the target decision flowchart may be automatically constructed. The target decision flowchart may characterize a data flow relation from time T to time T+1. If time T is not the end time, each trajectory conforming to requirements satisfies the data flow relation in the target decision flowchart at each time T.

For example, S120 may also include acquiring, based on a node addition operation triggered by the user on the visualization interface, multiple empty nodes added by the user; determining, based on a node information configuration operation triggered by the user for each empty node, business configuration information corresponding to the empty node, where the business configuration information includes node name information and a business feature bound to the node; configuring a corresponding empty node based on the business configuration information to obtain a corresponding business node; and acquiring, based on a connection operation triggered by the user for multiple business nodes, data flow information among the multiple business nodes to construct the target decision flowchart corresponding to the target business scenario.

For example, the user may perform time sequence combing on the multiple target business features to determine each node involved in the target business scenario, add the corresponding empty node such as the environment state node, the decision agent node, the environment agent node, or the static variable node through a node addition operation such as a node drag-and-drop manner on the visualization interface; and configure, for each added empty node, the corresponding node information such as the node name information corresponding to the node. Moreover, the user may bind the node to the corresponding business feature through a node binding operation so that each configured business node may be obtained. The multiple business nodes are connected based on a behavior influence relation among multiple business parameters and the data flow information among the multiple business nodes may be obtained based on a connection operation of the user so that the user may manually construct the target decision flowchart based on a business requirement, satisfying the personalized needs of the user.

Node configuration information may also include a node data type, a data value range, and information about an inserted function. The node data type includes a continuous type, a discrete type, and a default type. The discrete type includes a discrete ordered type and a discrete unordered type. The information about the inserted function may be a function constructed based on expert experiences so that the expert experiences are mixed in the decision flowchart through the insertion of the function, improving the flexibility and accuracy of construction. For example, the user may also dynamically configure the node data type, the data value range, and the information about the inserted function of each node so that a more realistic and accurate target decision flowchart can be constructed.

In S130, a target computation graph is constructed based on a business feature bound to each business node and data flow information among multiple business nodes in the target decision flowchart.

The target computation graph may refer to a computable decision flowchart. The target decision flowchart may correspond to one target computation graph. The target computation graph may be directly used for the construction of the virtual environment model corresponding to the target business scenario.

For example, based on the business feature bound to each business node and the data flow information among the multiple business nodes in the target decision flowchart, the target decision flowchart may be converted into the target computation graph that can be directly used for environmental modeling.

For example, S130 may include performing a format conversion on the target decision flowchart to determine target decision data in a structured data format; and determining, based on the business feature bound to each business node and the data flow information among the multiple business nodes in the target decision data, multiple computation nodes and a computation relation among the multiple computation nodes to construct the target computation graph.

The structured data format may be, but is not limited to, Yet Another Markup Language (YAML) format or JavaScript Object Notation (JSON) format. For example, the target decision flowchart may be converted into the target decision data in the structured data format, exemplarily, a target decision file in the YAML format may be obtained and stored. All computation nodes and a computation relation among the computation nodes in a deep learning network framework (such as TensorFlow and Pytorch) may be determined according to the business feature bound to each business node and the data flow information among the multiple business nodes in the target decision data so that the target computation graph is constructed. Each computation node is a computable function with a parameter, such as a deep neural network or other parameterized functions.

It is to be noted that in the present embodiment, the feature information of the target business feature may be used for verifying and determining the correctness of a logic relation among node decisions in the target computation graph. For example, the accuracy of a data format of each computation node and the accuracy of data flows among the computation nodes in the target computation graph may be verified by using the feature information in the form of the time sequence. Construction of a data flowchart in the related art requires writing codes to configure data flows and define function nodes. The data flowchart is generally convenient for developers to randomly check which nodes are involved in the business scenario and a relation among the nodes and to write codes based on their own understanding. A certain deviation exists between the data flowchart constructed in the manner of writing codes and the actual data flowchart. The manner of writing codes is irrelevant to actual business feature information and does not consider the compatibility with the training of a deep learning network model. In the present embodiment, the target computation graph that can be directly used for the environmental modeling is constructed so that the environmental modeling can be more accurately and reasonably performed, thereby ensuring the accuracy of the virtual environment model.

In S140, the environmental modeling is performed based on the target computation graph and the feature information of the target business feature so that a target virtual environment model corresponding to the target business scenario is determined.

The target virtual environment model may be a deep learning network model and may simulate the operation of a real environment in the target business scenario.

For example, an initial virtual environment model may be constructed based on the target computation graph and trained based on the feature information of the target business feature so as to obtain the target virtual environment model after the training so that an actual target business environment is replaced with the target virtual environment model for reinforcement learning. In this manner, a reinforcement learning effect is improved, and the personalized needs of the user are satisfied, thereby enabling the reinforcement learning to be implemented in real business scenarios.

For example, after S140, the method also includes performing, based on the target virtual environment model, the reinforcement learning on a preset decision model in the target business scenario to obtain the target decision model after the reinforcement learning.

The preset decision model may refer to a decision agent node in the target decision flowchart. The preset decision model is configured to decide behavior action information in different environment states to maximize a cumulative reward on a trajectory. For example, in the target virtual environment model, the preset decision model continuously interacts with the virtual environment for a period of time so that an interaction trajectory may be generated. The cumulative reward on the interaction trajectory is maximized so that the reinforcement learning is performed on the preset decision model, the optimal decision manner is trained, and the final target decision model is obtained. Therefore, the reinforcement learning can be more conveniently performed on the preset decision model in the target virtual environment model without interfering with a real user, and the learning effect of the target decision model is ensured.

According to the technical schemes of the embodiment of the present application, the target decision flowchart corresponding to the target business scenario is constructed based on the target business feature in the target business scenario to be modeled, where the business nodes in the target decision flowchart may include at least one environment state node and at least one decision agent node, and the at least one environment state node may include the current environment state child node, the environment state transition child node, and the next environment state child node. The target computation graph that can be directly used for the environmental modeling is constructed based on the business feature bound to each business node and the data flow information among the multiple business nodes in the target decision flowchart. The environmental modeling is performed based on the target computation graph and the feature information of the target business feature so that the target virtual environment model corresponding to the target business scenario can be more conveniently determined. Therefore, the actual target business environment can be replaced with the target virtual environment model for the reinforcement learning, thereby greatly reducing the cost of trial-and-errors in the actual target business environment, improving the reinforcement learning effect, and satisfying the personalized needs of the user.

### Embodiment two

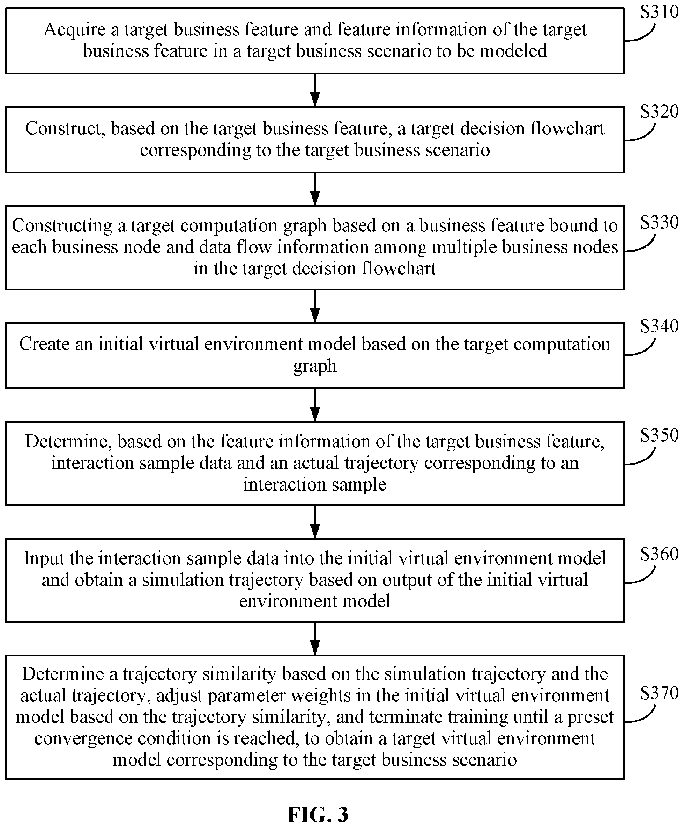

FIG. 3 is a flowchart of a decision flowchart-based environmental modeling method according to embodiment two of the present application. Based on the preceding embodiment, the construction process of a target virtual environment model is described in detail in the present embodiment. Explanations of terms identical to or corresponding to terms in the preceding embodiment are not repeated here. Referring to FIG. 3, the decision flowchart-based environmental modeling method provided in the present embodiment includes the steps described below.

In S310, a target business feature and feature information of the target business feature in a target business scenario to be modeled are acquired.

In S320, a target decision flowchart corresponding to the target business scenario is constructed based on the target business feature.

In S330, a target computation graph is constructed based on a business feature bound to each business node and data flow information among multiple business nodes in the target decision flowchart.

In S340, an initial virtual environment model is created based on the target computation graph.

For example, the initial virtual environment model corresponding to a preset deep learning network framework may be created based on the target computation graph. Alternatively, the corresponding initial virtual environment model is created based on a machine learning framework currently configured by a user. For example, hyperparameters may be configured based on a preset hyperparameter space, and different hyperparameters are configured in different business scenarios so as to construct the optimal initial virtual environment model. For example, if automatic parameter adjustment is configured, the optimal parameters may be automatically searched for during environment model training. For example, a model structure in the deep learning network framework may include, but is not limited to, at least one of a convolutional neural network (CNN), a long short-term memory (LSTM) network, or a residual network (ResNet) so that initial virtual environment models of different structures can be constructed.

In S350, interaction sample data and an actual trajectory corresponding to an interaction sample are determined based on the feature information of the target business feature.

For example, a process in which both an agent and a virtual environment perform an action once is referred to as one interaction or one step. A series of data generated through continuous interaction between the decision agent and the virtual environment over a period of time is referred to as a trajectory. The interaction sample data corresponding to an optimization target and the actual trajectory corresponding to the interaction sample data in the target business scenario may be extracted from the feature information of the target business feature based on feature information bound to each business node and the data flow information among the multiple business nodes in the target computation graph.

In S360, the interaction sample data are input into the initial virtual environment model, and a simulation trajectory is obtained based on output of the initial virtual environment model.

For example, the interaction sample data are input into the initial virtual environment model to be trained. Environment state data obtained after each interaction between the decision agent and the virtual environment are determined. The simulation trajectory determined in the initial virtual environment model may be obtained based on multiple environment state data generated through the continuous interaction over a continuous period of time.

In S370, a trajectory similarity is determined based on the simulation trajectory and the actual trajectory, parameter weights in the initial virtual environment model are adjusted based on the trajectory similarity, and training is terminated until a preset convergence condition is reached so that a target virtual environment model corresponding to the target business scenario is obtained.

The trajectory similarity may be used for characterizing a difference between the virtual environment and the real environment. The higher the trajectory similarity is, the more the virtual environment approximates to the real environment.

For example, similar to a manner of supervised learning, the trajectory similarity between the simulation trajectory and the actual trajectory, that is, an environment score, may be determined based on a preset error function such as a mean absolute error function or a mean square error function in the present embodiment. When the trajectory similarity is greater than a preset threshold, the parameter weights in the initial virtual environment model are adjusted, and the adjusted initial virtual environment model continues to be trained. When the trajectory similarity is smaller than the preset threshold or the change of the trajectory similarity tends to be stable, it may be determined that the preset convergence condition is reached, and the training of the initial virtual environment model is terminated so that the target virtual environment model is obtained.

According to the technical schemes of the present embodiment, the trajectory similarity is determined based on the simulation trajectory and the actual trajectory, the parameter weights in the initial virtual environment model are adjusted based on the trajectory similarity, the training is terminated until the preset convergence condition is reached so that the target virtual environment model corresponding to the target business scenario is obtained. Therefore, the environmental modeling can be performed based on the manner of supervised learning, and the target virtual environment model can be more accurately and conveniently trained.

The following is an embodiment of a decision flowchart-based environmental modeling apparatus according to the embodiment of the present application. The apparatus belongs to the same inventive concept as the decision flowchart-based environmental modeling method in the preceding embodiments. For details not described in the embodiment of the decision flowchart-based environmental modeling apparatus, reference may be made to the embodiments of the preceding decision flowchart-based environmental modeling method.

### Embodiment three

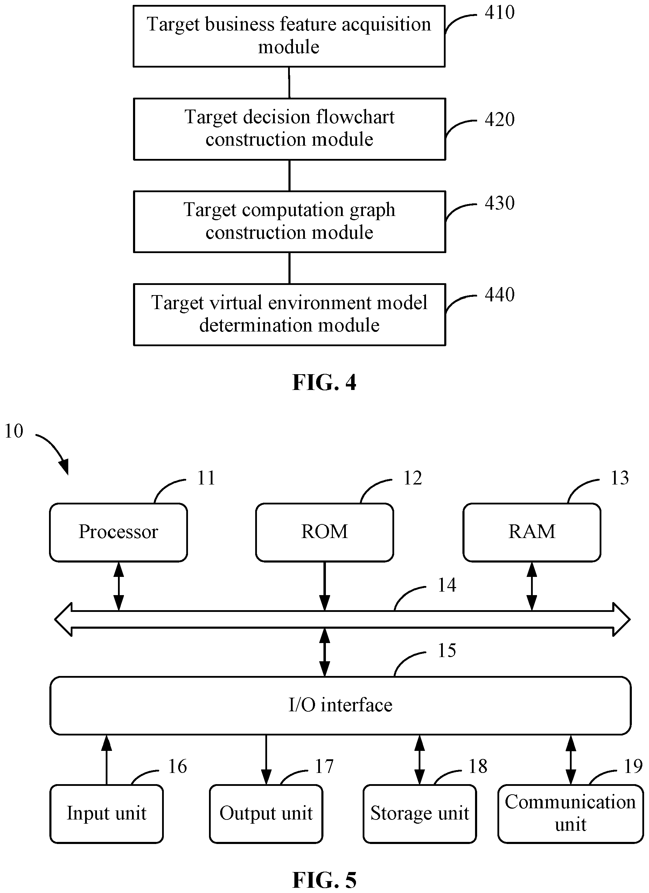

FIG. 4 is a structure diagram of a decision flowchart-based environmental modeling apparatus according to embodiment three of the present application. As shown in FIG. 4, the apparatus includes a target business feature acquisition module 410, a target decision flowchart construction module 420, a target computation graph construction module 430, and a target virtual environment model determination module 440.

The target business data acquisition module 410 is configured to acquire a target business feature and feature information of the target business features in a target business scenario to be modeled. The target decision flowchart construction module 420 is configured to construct, based on the target business feature, a target decision flowchart corresponding to the target business scenario, where business nodes in the target decision flowchart include at least one environment state node and at least one decision agent node, where the at least one environment state node includes a current environment state child node, an environment state transition child node, and a next environment state child node. The target computation graph construction module 430 is configured to construct a target computation graph based on a business feature bound to each business node and data flow information among multiple business nodes in the target decision flowchart. The target virtual environment model determination module 440 is configured to perform environmental modeling based on the target computation graph and the feature information of the target business feature to determine a target virtual environment model corresponding to the target business scenario.

According to the technical schemes of the embodiment of the present application, the target decision flowchart corresponding to the target business scenario is constructed based on the target business feature in the target business scenario to be modeled, where the business nodes in the target decision flowchart may include at least one environment state node and at least one decision agent node, and the at least one environment state node may include the current environment state child node, the environment state transition child node, and the next environment state child node. The target computation graph that can be directly used for the environmental modeling is constructed based on the business feature bound to each business node and the data flow information among the multiple business nodes in the target decision flowchart. The environmental modeling is performed based on the target computation graph and the feature information of the target business feature so that the target virtual environment model corresponding to the target business scenario can be more conveniently determined. Therefore, an actual target business environment can be replaced with the target virtual environment model for reinforcement learning, thereby improving a reinforcement learning effect and satisfying the personalized need of a user.

Optionally, the current environment state child node supports the output of a data flow; the environment state transition child node supports the input of a data flow and outputs a data flow to the next environment state child node; and the decision agent node supports the input of a data flow and the output of a data flow.

Optionally, the business nodes in the target decision flowchart also include at least one environment agent node and/or at least one static variable node. The environment agent node supports the input of a data flow and the output of a data flow, and the static variable node only supports the output of a data flow and does not support the input of a data flow.

Optionally, multiple target business features are provided. The target decision flowchart construction module 420 is configured to perform a feature analysis on the multiple target business features to determine a dependency relation among the multiple target business features and create the multiple business nodes and determine the data flow information among the multiple business nodes based on the dependency relation to construct the target decision flowchart corresponding to the target business scenario.

Optionally, the target decision flowchart construction module 420 is also configured to acquire, based on a node addition operation triggered by a user on a visualization interface, multiple empty nodes added by the user; determine, based on a node information configuration operation triggered by the user for each empty node, business configuration information corresponding to the empty node, where the business configuration information includes node name information and a business feature bound to a node; configure a corresponding empty node based on the business configuration information to obtain a corresponding business node; and acquire, based on a connection operation triggered by the user for multiple business nodes, data flow information among the multiple business nodes to construct the target decision flowchart corresponding to the target business scenario.

Optionally, node configuration information also includes a node data type, a data value range, and information about an inserted function. The node data type includes a continuous type, a discrete type, and a default type. The discrete type includes a discrete ordered type and a discrete unordered type.

Optionally, the target computation graph construction module 430 is configured to perform a format conversion on the target decision flowchart to determine target decision data in a structured data format; determine, based on the business feature bound to each business node and the data flow information among the multiple business nodes in the target decision data, multiple computation nodes and a computation relation among the multiple computation nodes to construct the target computation graph.

Optionally, the target virtual environment model determination module 440 is configured to create an initial virtual environment model based on the target computation graph; determine, based on the feature information of the target business feature, interaction sample data and an actual trajectory corresponding to an interaction sample; input the interaction sample data into the initial virtual environment model and obtain a simulation trajectory based on the output of the initial virtual environment model; and determine a trajectory similarity based on the simulation trajectory and the actual trajectory, adjust parameter weights in the initial virtual environment model based on the trajectory similarity, and terminate training until a preset convergence condition is reached to obtain the target virtual environment model corresponding to the target business scenario.

Alternatively, the apparatus also includes a reinforcement learning module. The reinforcement learning module is configured to perform, based on the target virtual environment model, reinforcement learning on a preset decision model in the target business scenario after the target virtual environment model corresponding to the target business scenario is determined, so as to obtain a target decision model after the reinforcement learning.

The decision flowchart-based environmental modeling apparatus according to the embodiment of the present application may perform the decision flowchart-based environmental modeling method according to any one of the embodiments of the present application and has corresponding functional modules for performing the decision flowchart-based environmental modeling method.

It is to be noted that units and modules included in the embodiment of the preceding decision flowchart-based environmental modeling apparatus are divided according to functional logic and the division is not limited to this as long as the corresponding functions can be implemented. In addition, the specific names of functional units are only used for distinguishing between each other and are not intended to limit the scope of the present application.

### Embodiment four

FIG. 5 is a structure diagram of an electronic device 10 that may be used for implementing an embodiment of the present application. The electronic device is intended to represent various forms of digital computers, for example, laptop computers, desktop computers, worktables, personal digital assistants, servers, blade servers, mainframe computers, and other applicable computers. The electronic device may also represent various forms of mobile apparatuses, for example, a personal digital assistant, a cellphone, a smartphone, a wearable device (such as a helmet, glasses, and a watch), or other similar computing apparatuses. Herein the shown components, the connections and relationships between these components, and the functions of these components are illustrative only and are not intended to limit the implementation of the present application as described and/or claimed herein.

As shown in FIG. 5, the electronic device 10 includes at least one processor 11 and a memory communicatively connected to the at least one processor 11, such as a read-only memory (ROM) 12 and a random access memory (RAM) 13. The memory stores a computer program executable by the at least one processor. The processor 11 may perform various appropriate actions and processing according to a computer program stored in the ROM 12 or a computer program loaded from a storage unit 18 into the RAM 13. Various programs and data required for operations of the electronic device 10 may also be stored in the RAM 13. The processor 11, the ROM 12, and the RAM 13 are connected to each other via a bus 14. An input/output (I/O) interface 15 is also connected to the bus 14.

Multiple components in the electronic device 10 are connected to the I/O interface 15. The components include an input unit 16 such as a keyboard or a mouse, an output unit 17 such as various types of display or speaker, the storage unit 18 such as a magnetic disk or an optical disc, and a communication unit 19 such as a network card, a modem, or a wireless communication transceiver. The communication unit 19 allows the electronic device 10 to exchange information/data with other devices via a computer network such as the Internet and/or various telecommunication networks.

The processor 11 may be various general-purpose and/or special-purpose processing components having processing and computing capabilities. Some examples of the processor 11 include, but are not limited to, a central processing unit (CPU), a graphics processing unit (GPU), various special-purpose artificial intelligence (AI) computing chips, various processors executing machine learning model algorithms, a digital signal processing (DSP), and any suitable processors, controllers, and microcontrollers. The processor 11 performs the preceding methods and processing, such as a decision flowchart-based environmental modeling method.

In some embodiments, the decision flowchart-based environmental modeling method may be implemented as a computer program tangibly included in a computer-readable storage medium, such as the storage unit 18. In some embodiments, part or all of the computer program may be loaded and/or installed on the electronic device 10 via the ROM 12 and/or the communication unit 19. When the computer program is loaded into the RAM 13 and executed by the processor 11, at least one step of the preceding decision flowchart-based environmental modeling method may be performed. Alternatively, in other embodiments, the processor 11 may be configured, in any other suitable manner (for example, by means of firmware), to perform the decision flowchart-based environmental modeling method.

The various embodiments of the systems and techniques described above herein may be implemented in digital electronic circuitry, integrated circuitry, field programmable gate arrays (FPGAs), application specific integrated circuits (ASICs), application specific standard products (ASSPs), system on chips (SOCs), complex programmable logic devices (CPLDs), computer hardware, firmware, software, and/or combinations thereof. The various embodiments may include implementations in at least one computer program. The at least one computer program is executable and/or interpretable on a programmable system including at least one programmable processor. The programmable processor may be a special-purpose or general-purpose programmable processor for receiving data and instructions from a memory system, at least one input apparatus, and at least one output apparatus and transmitting data and instructions to the memory system, the at least one input apparatus, and the at least one output apparatus.

In order that interaction with a user is provided, the systems and techniques described herein may be implemented on an electronic device. The electronic device has a display apparatus (such as a cathode ray tube (CRT) or a liquid crystal display (LCD) monitor) for displaying information to the user; and a keyboard and a pointing apparatus (such as a mouse or a trackball) through which the user can provide input to the electronic device. Other types of devices may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware or front-end components. Components of a system may be interconnected by any form or medium of digital data communications (for example, a communication network). Examples of the communication network include a local area network (LAN), a wide area network (WAN), a blockchain network, and the Internet.

A computing system may include clients and servers. A client and a server are generally remote from each other and typically interact through a communication network. The relation between the client and the server arises by virtue of computer programs running on respective computers and having a client-server relation with each other. The server may be a cloud server, also referred to as a cloud computing server or a cloud host. As a host product in a cloud computing service system, the server solves the defects of difficult management and weak business scalability in a related physical host and a related virtual private server (VPS).

It is to be understood that various forms of the preceding flows may be used with steps reordered, added, or removed. For example, the steps described in the present application may be performed in parallel, in sequence, or in a different order as long as the desired result of the technical schemes of the present application can be achieved. The execution sequence of the steps is not limited herein.

## Claims

1. A decision flowchart-based environmental modeling method, comprising:
acquiring a target business feature in a target business scenario to be modeled and feature information of the target business feature;
constructing, based on the target business feature, a target decision flowchart corresponding to the target business scenario, wherein business nodes in the target decision flowchart comprise at least one environment state node and at least one decision agent node, wherein the at least one environment state node comprises a current environment state child node, an environment state transition child node, and a next environment state child node;
constructing a target computation graph based on a business feature bound to each of the business nodes in the target decision flowchart and data flow information among the plurality of business nodes in the target decision flowchart; and
performing environmental modeling based on the target computation graph and the feature information of the target business features to determine a target virtual environment model corresponding to the target business scenario.

2. The method according to claim 1, wherein the current environment state child node supports output of a data flow, the environment state transition child node supports input of a data flow and outputs a data flow to the next environment state child node, and each of the at least one decision agent node supports input of a data flow and output of a data flow.

3. The method according to claim 1, wherein the business nodes in the target decision flowchart further comprise at least one of at least one environment agent node or at least one static variable node, wherein each of the at least one environment agent node supports input of a data flow and output of a data flow, and each of the at least one static variable node only supports output of a data flow and does not support input of a data flow.

4. The method according to claim 1, wherein a plurality of target business features are provided, and constructing, based on the target business feature, the target decision flowchart corresponding to the target business scenario comprises:
performing a feature analysis on the plurality of target business features to determine a dependency relation among the plurality of target business features; and
creating, based on the dependency relation, the plurality of business nodes and determining the data flow information among the plurality of business nodes to construct the target decision flowchart corresponding to the target business scenario.

5. The method according to claim 1, wherein constructing, based on the target business feature, the target decision flowchart corresponding to the target business scenario comprises:
acquiring, based on a node addition operation triggered by a user on a visualization interface, a plurality of empty nodes added by the user;
determining, based on a node information configuration operation triggered by the user for each empty node of the plurality of empty nodes, business configuration information corresponding to the each empty node, wherein the business configuration information comprises node name information and a business feature bound to a node;
configuring a corresponding empty node based on the business configuration information to obtain a corresponding business node; and
acquiring, based on a connection operation triggered by the user for a plurality of business nodes, data flow information among the plurality of business nodes to construct the target decision flowchart corresponding to the target business scenario.

6. The method according to claim 5, wherein node configuration information further comprises a node data type, a data value range, and information about an inserted function, wherein the node data type comprises a continuous type, a discrete type, and a default type, wherein the discrete type comprises a discrete ordered type and a discrete unordered type.

7. The method according to claim 1, wherein constructing the target computation graph based on the business feature bound to each of the business nodes in the target decision flowchart and the data flow information among the plurality of business nodes in the target decision flowchart comprises:
performing a format conversion on the target decision flowchart to determine target decision data in a structured data format; and
determining, based on the business feature bound to each of the business nodes and the data flow information among the plurality of business nodes in the target decision data, a plurality of computation nodes and a computation relation among the plurality of computation nodes to construct the target computation graph.

8. The method according to claim 1, wherein performing the environmental modeling based on the target computation graph and the feature information of the target business feature to determine the target virtual environment model corresponding to the target business scenario comprises:
creating an initial virtual environment model based on the target computation graph;
determining, based on the feature information of the target business feature, interaction sample data and an actual trajectory corresponding to an interaction sample;
inputting the interaction sample data into the initial virtual environment model and obtaining a simulation trajectory based on output of the initial virtual environment model; and
determining a trajectory similarity based on the simulation trajectory and the actual trajectory, adjusting parameter weights in the initial virtual environment model based on the trajectory similarity, and terminating training until a preset convergence condition is reached, to obtain the target virtual environment model corresponding to the target business scenario.

9. The method according to any one of claims 1 to 8, after determining the target virtual environment model corresponding to the target business scenario, further comprising:
performing, based on the target virtual environment model, reinforcement learning on a preset decision model in the target business scenario to obtain a target decision model after the reinforcement learning.

10. A decision flowchart-based environmental modeling apparatus, comprising:
a target business feature acquisition module configured to acquire a target business feature and feature information of the target business feature in a target business scenario to be modeled;
a target decision flowchart construction module configured to construct, based on the target business feature, a target decision flowchart corresponding to the target business scenario, wherein business nodes in the target decision flowchart comprise at least one environment state node and at least one decision agent node, wherein the at least one environment state node comprises a current environment state child node, an environment state transition child node, and a next environment state child node;
a target computation graph construction module configured to construct a target computation graph based on a business feature bound to each of the business nodes in the target decision flowchart and data flow information among the plurality of business nodes in the target decision flowchart; and
a target virtual environment model determination module configured to perform environmental modeling based on the target computation graph and the feature information of the target business feature to determine a target virtual environment model corresponding to the target business scenario.

11. An electronic device, comprising:
at least one processor; and
a memory communicatively connected to the at least one processor;
wherein the memory stores a computer program executable by the at least one processor, wherein the computer program is executed by the at least one processor to enable the at least one processor to perform the decision flowchart-based environmental modeling method according to any one of claims 1 to 9.

12. A computer-readable storage medium, comprising a computer program which, when executed by a processor, enables the processor to perform the decision flowchart-based environmental modeling method according to any one of claims 1 to 9.
